(19) Europäisches Patentamt
European Patent Office
Office européen des brevets

(11) EP 4 530 317 A1

(12) **EUROPEAN PATENT APPLICATION**
published in accordance with Art. 153(4) EPC

(43) Date of publication:
**02.04.2025 Bulletin 2025/14**

(21) Application number: **23812072.9**

(22) Date of filing: **19.05.2023**

(51) International Patent Classification (IPC):
***C08L 69/00*** *(2006.01)* ***C08L 53/02*** *(2006.01)*
***C08L 25/18*** *(2006.01)* ***C08L 51/04*** *(2006.01)*
***C08L 51/08*** *(2006.01)* ***C08K 5/5435*** *(2006.01)*
***C08K 5/49*** *(2006.01)* ***C08K 5/00*** *(2006.01)*
***C08F 279/06*** *(2006.01)*

(86) International application number:
**PCT/KR2023/006823**

(87) International publication number:
**WO 2023/229298 (30.11.2023 Gazette 2023/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.05.2022 KR 20220062628**

(71) Applicant: **LOTTE CHEMICAL CORPORATION**
**Seoul 05551 (KR)**

(72) Inventors:
- **JUN, Beom Sun**
  **Uiwiang-si Gyeonggi-do 16073 (KR)**
- **KANG, Tae Gon**
  **Uiwiang-si Gyeonggi-do 16073 (KR)**
- **CHOI, Dong Kil**
  **Uiwiang-si Gyeonggi-do 16073 (KR)**

(74) Representative: **Germain Maureau**
**12, rue Boileau**
**69006 Lyon (FR)**

# (54) THERMOPLASTIC RESIN COMPOSITION AND MOLDED PRODUCT MANUFACTURED THEREFROM

(57) A thermoplastic resin composition of the present invention comprises: a polycarbonate resin; a continuous rubber-modified aromatic vinyl-based copolymer resin including a large-diameter rubbery polymer having an average particle size of about 500 to about 3,000 nm and an aromatic vinyl-based copolymer resin; an aromatic vinyl-based copolymer resin including an epoxy group; a silicone-based rubber-modified vinyl-based graft copolymer having a Si content of about 5 to about 20 weight percent; a diene-based rubber-modified vinyl-based graft copolymer having, graft-polymerized to a diene-based rubbery polymer, a monomer mixture including an aromatic vinyl-based monomer and methyl methacrylate; an alkoxy silane-based compound; and a phosphorus-based flame retardant, wherein in 100% by weight of the total thermoplastic resin composition, the Si content is about 0.02 to about 0.6% by weight. The thermoplastic resin composition has excellent hydrolysis resistance, flame retardancy, impact resistance, heat resistance, fluidity, etc.

EP 4 530 317 A1

## Description

[Technical Field]

The present invention relates to a thermoplastic resin composition and a molded product manufactured using the same. More particularly, the present invention relates to a thermoplastic resin composition having good properties in terms of hydrolysis resistance, flame retardancy, impact resistance, heat resistance, fluidity, and the like, and a molded product manufactured using the same.

[Background Art]

Thermoplastic resin compositions including a polycarbonate resin, a rubber-modified aromatic vinyl copolymer resin, such as an acrylonitrile-butadienestyrene (ABS) copolymer resin, a flame retardant, and the like have good properties in terms of impact resistance, flame retardancy, processability, and the like and thus are useful as a material for housings of electrical/electronic products that generate a lot of heat and interior/exterior materials for office machines.

However, polycarbonate-based thermoplastic resin compositions are susceptible to degradation under high temperature and high humidity conditions, leading to deterioration in flame retardancy and mechanical properties and, at worst, product failure. While polyester resins such as PET, PBT, and PCT may be used to improve hydrolysis resistance of a thermoplastic resin composition, the use of these resins cannot fully prevent deterioration in flame retardancy and mechanical properties of the resin composition.

Therefore, there is a need for a thermoplastic resin having good properties in terms of hydrolysis resistance, flame retardancy, impact resistance, heat resistance, fluidity, and balance therebetween.

The background technique of the present invention is disclosed in U.S. Patent Registration No. 5,061,745 and the like.

[Disclosure]

[Technical Problem]

It is an object of the present invention to provide a thermoplastic resin composition having good properties in terms of hydrolysis resistance, flame retardancy, impact resistance, heat resistance, fluidity, and the like.

It is another object of the present invention to provide a molded product formed of the thermoplastic resin composition.

The above and other objects of the present invention will become apparent from the detailed description of the following embodiments.

[Technical Solution]

1. One aspect of the present invention relates to a thermoplastic resin composition. The thermoplastic resin composition comprises: about 100 parts by weight of a polycarbonate resin; about 1 part by weight to about 25 parts by weight of a continuous rubber-modified aromatic vinyl copolymer resin including a large-diameter rubber polymer having an average particle size of about 500 nm to about 3,000 nm and an aromatic vinyl copolymer resin; about 0.5 parts by weight to about 10 parts by weight of an epoxy group-containing aromatic vinyl copolymer resin; about 0.1 parts by weight to about 6 parts by weight of a silicone rubber-modified vinyl graft copolymer containing about 5 wt% to about 20 wt% of Si; about 0.1 parts by weight to about 5 parts by weight of a diene rubber-modified vinyl graft copolymer prepared by graft polymerization of a monomer mixture including an aromatic vinyl monomer and methyl methacrylate to a diene rubber polymer; about 0.05 parts by weight to about 3.5 parts by weight of an alkoxysilane compound; and about 1 part by weight to about 30 parts by weight of a phosphorus flame retardant, wherein the content of Si is about 0.02 wt% to about 0.6 wt% based on the total weight of the thermoplastic resin composition.
2. In embodiment 1, the continuous rubber-modified aromatic vinyl copolymer resin may be a mixture in which the large-diameter rubber polymer having an average particle size of about 500 nm to about 3,000 nm is present as a dispersed phase and the aromatic vinyl copolymer resin is present as a continuous phase, wherein the large-diameter rubber polymer is prepared by continuous solution polymerization of a rubber polymer having a viscosity of about 40 cP to about 80 cP in a solution containing 5 wt% of styrene with an aromatic vinyl monomer and a monomer copolymerizable with the aromatic vinyl monomer.

3. In embodiment 1 or 2, the epoxy group-containing aromatic vinyl copolymer resin may be prepared by polymerization of an epoxy group-containing (meth)acrylate with an aromatic vinyl monomer and a monomer copolymerizable with the aromatic vinyl monomer.

4. In embodiments 1 to 3, the silicone rubber-modified vinyl graft copolymer may be prepared by graft polymerization of an alkyl (meth)acrylate monomer to a silicone rubber polymer.

5. In embodiments 1 to 4, the alkoxysilane compound may comprise at least one of glycidoxypropyltrimethoxysilane, 3,4-epoxycyclohexylethyltrimethoxysilane, glycidoxypropyldiethoxysilane, and glycidoxypropyltriethoxysilane.

6. In embodiments 1 to 5, the phosphorus flame retardant may comprise at least one of phosphate compounds, phosphonate compounds, phosphinate compounds, phosphine oxide compounds, and phosphazene compounds.

7. In embodiments 1 to 6, the thermoplastic resin composition may have a melt-flow index increase rate of about 33% or less, as calculated according to Equation 1:

[Equation 1]

$$\text{Melt-flow index increase rate (\%)} = ((MI_1 - MI_0)/MI_0) \times 100$$

where $MI_0$ is a melt-flow index of a specimen of the thermoplastic resin composition, as measured at a temperature of 220°C under a load of 10 kgf in accordance with ASTM D1238, and $MI_1$ is a melt-flow index of the specimen, as measured at a temperature of 220°C under a load of 10 kgf in accordance with ASTM D1238 after leaving the specimen at 85°C and 85% RH for 144 hours.

8. In embodiments 1 to 7, the thermoplastic resin composition may have a flame retardancy of V-0 or greater, as measured on a 1.5 mm thick specimen by the UL-94 vertical burning test method.

9. In embodiments 1 to 8, the thermoplastic resin composition may have a notched Izod impact strength of about 10 kgf·cm/cm to about 85 kgf·cm/cm, as measured on a 1/8" thick specimen in accordance with ASTM D256.

10. In embodiments 1 to 9, the thermoplastic resin composition may have a Vicat softening temperature of about 90°C to about 140°C, as measured at a heating rate of 50°C/hr under a load of 5 kgf in accordance with ISO 306.

11. In embodiments 1 to 10, the thermoplastic resin composition may have a melt-flow index of about 10 g/10 min to about 60 g/10 min, as measured on a specimen at a temperature of 220°C under a load of 10 kgf in accordance with ASTM D1238.

12. Another aspect of the present invention relates to a molded product. The molded product is formed of the thermoplastic resin composition according to any one of embodiments 1 to 11.

[Advantageous Effects]

Embodiments of the present invention provides a thermoplastic resin composition having good properties in terms of hydrolysis resistance, flame retardancy, impact resistance, heat resistance, fluidity, and the like, and a molded product formed of the same.

[Best Mode]

Hereinafter, exemplary embodiments of the present invention will be described in detail.

A thermoplastic resin composition according to the present invention comprises: (A) a polycarbonate resin; (B) a continuous rubber-modified aromatic vinyl copolymer resin; (C) an epoxy group-containing aromatic vinyl copolymer resin; (D) a silicone rubber-modified vinyl graft copolymer; (E) a diene rubber-modified vinyl graft copolymer; (F) an alkoxysilane compound; and (G) a phosphorus flame retardant.

As used herein to represent a specific numerical range, "a to b" is defined as "≥a and ≤b".

(A) Polycarbonate resin

The polycarbonate resin according to the present invention may include a polycarbonate resin used in typical thermoplastic resin compositions. For example, the polycarbonate resin may include an aromatic polycarbonate resin prepared by reacting diphenols (aromatic diol compounds) with a carbonate precursor, such as phosgene, halogen formate, carbonic diester, and the like.

In some embodiments, the diphenols may include, for example, 4,4'-biphenol, 2,2-bis(4-hydroxyphenyl)propane, 2,4-bis(4-hydroxyphenyl)-2-methylbutane, 1,1-bis(4-hydroxyphenyl)cyclohexane, 2,2-bis(3-chloro-4-hydroxyphenyl)propane, 2,2-bis(3,5-dichloro-4-hydroxyphenyl)propane, 2,2-bis(3-methyl-4-hydroxyphenyl)propane, 2,2-bis(3,5-dimethyl-4-hydroxyphenyl)propane, and the like, without being limited thereto. For example, the diphenols may include 2,2-bis-(4-hydroxyphenyl)propane, 2,2-bis(3,5-dichloro-4-hydroxyphenyl)propane, 2,2-bis(3 -methyl-4-hydroxyphenyl)propane, 2,2-bis(3,5-dimethyl-4-hydroxyphenyl)propane, or 1,1-bis(4-hydroxyphenyl)cyclohexane, specifically 2,2-bis(4-hydroxyphenyl)propane, which is referred to as bisphenol A.

In some embodiments, the carbonate precursor may include, for example, dimethyl carbonate, diethyl carbonate, dibutyl carbonate, dicyclohexyl carbonate, diphenyl carbonate, ditolyl carbonate, bis(chlorophenyl) carbonate, m-cresyl carbonate, dinaphthyl carbonate, carbonyl chloride (phosgene), diphosgene, triphosgene, carbonyl bromide, bishaloformate, and the like. These may be used alone or as a mixture thereof.

The polycarbonate resin may include a branched polycarbonate resin. For example, the polycarbonate resin may include a branched polycarbonate resin prepared by adding about 0.05 mol% to about 2 mol% of a tri- or higher polyfunctional compound, specifically a tri- or higher valent phenol group-containing compound, based on the total number of moles of the diphenols used in polymerization.

The polycarbonate resin may include a homopolycarbonate resin, a copolycarbonate resin, or a blend thereof. In addition, the polycarbonate resin may be partially or completely replaced by an aromatic polyester-carbonate resin obtained by polymerization in the presence of an ester precursor, for example, a bifunctional carboxylic acid.

In some embodiments, the polycarbonate resin may have a weight average molecular weight (Mw) of about 10,000 g/mol to about 200,000 g/mol, for example, about 15,000 g/mol to about 40,000 g/mol, as measured by gel permeation chromatography (GPC). Within this range, the thermoplastic resin composition can have good properties in terms of impact resistance, fluidity, and the like.

In some embodiments, the polycarbonate resin may have a melt-flow Index (MI) of about 2 g/10 min to about 100 g/10 min, as measured at 300°C under a load of 1.2 kgf in accordance with ISO 1133. In addition, the polycarbonate resin may include a mixture of two or more polycarbonate resins having different melt-flow indices.

(B) Continuous rubber-modified aromatic vinyl copolymer resin

The continuous rubber-modified aromatic vinyl copolymer resin according to the present invention serves to improve properties of the thermoplastic resin composition, such as hydrolysis resistance, flame retardancy, impact resistance, heat resistance, fluidity, and balance therebetween, in combination with the polycarbonate resin, the epoxy group-containing aromatic vinyl copolymer resin, the silicone rubber-modified vinyl graft copolymer, the diene rubber-modified vinyl graft copolymer, the alkoxysilane compound, and the phosphorus flame retardant. The continuous rubber-modified aromatic vinyl copolymer resin comprises a large-diameter rubber polymer having an average particle size of about 500 nm to about 3,000 nm and an aromatic vinyl copolymer resin.

In some embodiments, the large-diameter rubber polymer may have an average particle size ($D_{50}$, volume average) of about 500 nm to about 3,000 nm, for example, about 800 nm to about 2,000 nm, as measured using a particle size analyzer (Mastersizer S Ver.2.14, Malvern Instruments Ltd.). If the average particle size of the large-diameter rubber polymer is less than about 500 nm, the thermoplastic resin composition can have poor properties in terms of impact resistance and the like, whereas, if the average particle size of the large-diameter rubber polymer exceeds about 3,000 nm, the thermoplastic resin composition can have poor properties in terms of fluidity, appearance, and the like.

In some embodiments, the aromatic vinyl copolymer resin may have a weight average molecular weight (Mw) of about 10,000 g/mol to about 300,000 g/mol, for example, about 15,000 g/mol to about 150,000 g/mol, as measured by gel permeation chromatography (GPC). Within this range, the thermoplastic resin composition can have good properties in terms of mechanical strength, moldability, and the like.

In some embodiments, the continuous rubber-modified aromatic vinyl copolymer resin may comprise about 1 wt% to about 25 wt%, for example, about 5 wt% to about 20 wt%, of the large-diameter rubber polymer and about 75 wt% to about 99 wt%, for example, about 80 wt% to about 95 wt%, of the aromatic vinyl copolymer resin based on the total weight of the continuous rubber-modified aromatic vinyl copolymer resin. Within this range, the thermoplastic resin composition can have good properties in terms of impact resistance, flame retardancy, and the like.

In some embodiments, the continuous rubber-modified aromatic vinyl copolymer resin may be prepared by continuous solution polymerization of a rubber polymer, an aromatic vinyl monomer, and a monomer copolymerizable with the aromatic vinyl monomer, wherein the rubber polymer has a viscosity of about 40 cP to about 80 cP, for example, about 45 cP to about 60 cP, as measured in a solution containing 5 wt% of styrene. The continuous rubber-modified aromatic vinyl copolymer resin may be incorporated into the thermoplastic resin composition in the form of a mixture of the large-diameter rubbery polymer as a dispersed phase and the aromatic vinyl copolymer resin as a continuous phase.

Specifically, the continuous rubber-modified aromatic vinyl copolymer resin may be prepared by preparing a reaction solution through mixing of a polymerization initiator and a molecular weight regulator with a mixed solution in which the rubber polymer, the aromatic vinyl monomer, and the monomer copolymerizable with the aromatic vinyl monomer, and a solvent are mixed together, introducing the reaction solution into a first reactor, followed by polymerization to a conversion of about 30% to about 40%, and introducing the resulting polymerization product into a second reactor, followed by polymerization to a conversion of about 70% to about 80%.

In some embodiments, the mixed solution may comprise about 3 wt% to about 15 wt% of the rubber polymer, about 50 wt% to about 85 wt% of the aromatic vinyl monomer and the monomer copolymerizable with the aromatic vinyl monomer, and about 5 wt% to about 30 wt% of the solvent.

In some embodiments, the rubber polymer comprised in the mixed solution may include, for example, diene rubbers (diene rubber polymers), such as polybutadiene, poly(styrene-butadiene), poly(acrylonitrile-butadiene), and the like, saturated rubbers obtained by hydrogenation of the diene rubbers, isoprene rubbers, acrylate rubbers (acrylate rubber polymers), such as poly(butyl acrylate) and the like, and ethylene-propylene-diene monomer terpolymers (EPDMs), without being limited thereto. These may be used alone or as a mixture thereof. For example, the rubber polymer may include a diene rubber, specifically, polybutadiene rubber. In addition, the rubber polymer may have a viscosity of about 40 cP to about 80 cP, for example, about 45 cP to about 60 cP, as measured in a solution containing 5 wt% of styrene. Within this range of viscosity in the styrene solution, the large-diameter rubber polymer having an average particle size in the range described above can be prepared.

In some embodiments, the aromatic vinyl monomer comprised in the mixed solution may include styrene, α-methylstyrene, β-methylstyrene, p-methylstyrene, p-t-butylstyrene, ethylstyrene, vinylxylene, monochlorostyrene, dichlorostyrene, dibromostyrene, vinyl naphthalene, and the like. These may be used alone or as a mixture thereof.

In some embodiments, the monomer copolymerizable with the aromatic vinyl monomer, which is comprised in the mixed solution, may include, for example, vinyl cyanide monomers, such as acrylonitrile, methacrylonitrile, ethacrylonitrile, phenylacrylonitrile, α-chloroacrylonitrile, fumaronitrile, and the like. These may be used alone or as a mixture thereof.

In some embodiments, the aromatic vinyl monomer may be present in an amount of about 20 wt% to about 90 wt%, for example, about 30 wt% to about 80 wt%, based on the total weight of the aromatic vinyl monomer and the monomer copolymerizable with the aromatic vinyl monomer; and the monomer copolymerizable with the aromatic vinyl monomer may be present in an amount of about 10 wt% to about 80 wt%, for example, about 20 wt% to about 70 wt%, based on the total weight of the aromatic vinyl monomer and the monomer copolymerizable with the aromatic vinyl monomer.

In some embodiments, the solvent may include aromatic organic solvents. For example, the solvent may include ethylbenzene, xylene, toluene, and the like. These may be used alone or as a mixture thereof.

In some embodiments, the polymerization initiator preferably has a half-life of 10 minutes or less at a given reactor (polymerization) temperature, and may include, for example, radical initiators, such as 1,1-bis(t-butylperoxy)-2-methylcyclohexane, 1,1-bis(t-butylperoxy)cyclohexane, 2-bis(4,4-di-t-butylperoxy cyclohexane)propane, t-hexylperoxy isopropyl monocarbonate, t-butylperoxy maleic acid, t-butylperoxy-3,5,5-trimethylhexanoate, t-butylperoxy laurate, 2,5-dimethyl-2,5-bis(m-toluoylperoxy)hexane, t-butylperoxy isopropyl monocarbonate, t-butylperoxy 2-ethylhexyl monocarbonate, t-hexylperoxy benzoate, 2,5-dimethyl-2,5-bis(benzoylperoxy)hexane, t-butylperoxy acetate, 2,2-bis(t-butylperoxy)butane, t-butylperoxy benzoate, n-butyl-4,4-bis(t-butylperoxy)valerate, and mixtures thereof. The polymerization initiator may be present in an amount of about 0.007 parts by weight to about 0.07 parts by weight, for example, about 0.01 parts by weight to about 0.05 parts by weight, relative to about 100 parts by weight of the mixed solution. Within this range, deterioration in appearance characteristics due to the remaining polymerization initiator can be reduced.

In some embodiments, the molecular weight regulator may include alkyl mercaptans, such as t-dodecyl mercaptan, n-dodecyl mercaptan, and the like. The molecular weight regulator may be present in an amount of about 0.02 parts by weight to about 1 part by weight, for example, about 0.03 parts by weight to about 0.5 parts by weight, relative to about 100 parts by weight of the mixed solution.

In some embodiments, the continuous solution polymerization process is preferably performed while circulating a refrigerant through a jacket, a coil, or the like, so as to control exothermic reaction that can occur in the reactors due to polymerization reaction.

In some embodiments, the reaction solution with the polymerization initiator and the molecular weight regulator added thereto may be subjected to polymerization to a conversion of about 30% to about 40%, for example, about 32% to about 38%, in the first reactor. Within this range, stable polymerization can be achieved without excessive load of a stirrer.

In some embodiments, reaction in the first reactor may be conducted at a temperature of about 60°C to about 150°C, for example, about 70°C to about 130°C. Here, the reaction temperature may be varied depending on the type of reactor used, stirring rate, the type of polymerization initiator used, and the like.

In some embodiments, stirring in the first reactor may be conducted at a rate of about 60 rpm to about 150 rpm, for example, about 80 rpm to about 140 rpm, specifically about 90 rpm to about 130 rpm. Here, the stirring rate may be varied depending on reactor size, the type of polymerization initiator used, reaction temperature, and the like. Within this range, the large-diameter rubber polymer can be prepared.

In some embodiments, the polymerization product prepared in the first reactor may be subjected to polymerization to a conversion of about 70% to about 80% in the second reactor. Within this range, the large-diameter rubber polymer can be produced.

In some embodiments, reaction in the second reactor may be conducted at a temperature of about 80°C to about

170°C, for example, about 120°C to about 160°C. Here, the reaction temperature may be varied depending on the type of reactor used, stirring rate, the type of polymerization initiator used, and the like.

In some embodiments, stirring in the second reactor may be conducted at a rate of about 50 rpm to about 100 rpm, for example, about 60 rpm to about 95 rpm, specifically about 65 rpm to about 90 rpm. Here, the stirring rate may be varied depending on reactor size, the type of polymerization initiator used, reaction temperature, and the like. Within this range, the large-diameter rubber polymer can be prepared.

In some embodiments, the continuous solution polymerization process may further comprise removing unreacted monomers and the remaining solvent by devolatilizing a polymerization product prepared in the second reactor. Here, the devolatilization process may be performed using a devolatilization tank. In one embodiment, the devolatilization process may be performed using a single devolatilization tank. In another embodiment, the devolatilization process may be performed using a first devolatilization tank and a second devolatilization tank vertically connected to each other to remove unreacted residues. Through the devolatilization process, the content of residual monomers in the polymerization product may be reduced to about 1,500 ppm or less, for example, about 1,000 ppm or less, specifically about 700 ppm or less.

In some embodiments, the devolatilization tank (devolatilization device) is preferably a falling strand devolatilization (DEVO) tank. Here, the angle of a cone of the falling strand devolatilization tank is designed to minimize retention time in the devolatilization tank and to effectively transfer a devolatilized product to an underlying gear pump.

In some embodiments, the first devolatilization tank and the second devolatilization tank may be vertically connected to each other to minimize a connection line between the DEVOs. In addition, it is desirable that the first devolatilization tank DV-1 be provided with a control valve or a regulator to adjust the pressure in the first devolatilization tank.

In some embodiments, the first devolatilization tank may be operated under conditions of a pressure of about 100 torr to about 600 torr, for example, about 200 torr to about 500 torr, a temperature of about 160°C to about 240°C, for example, about 180°C to about 220°C, and a retention time of about 10 minutes or less. Within these ranges, reduction of impurities, such as residual monomers, and high productivity can be achieved. In addition, the second devolatilization tank may be operated under conditions of a pressure of about 1 torr to about 50 torr, a temperature of about 210°C to about 250°C, and a retention time of about 10 minutes or less, for example, 5 minutes or less. Within these ranges, the resulting rubber-modified aromatic vinyl copolymer resin can have good properties in terms of color and the like.

In some embodiments, the continuous rubber-modified aromatic vinyl copolymer resin may be present in an amount of about 1 part by weight to about 25 parts by weight, for example, about 5 parts by weight to about 20 parts by weight, relative to about 100 parts by weight of the polycarbonate resin. If the content of the continuous rubber-modified aromatic vinyl copolymer resin is less than about 1 part by weight relative to about 100 parts by weight of the polycarbonate resin, the thermoplastic resin composition can have poor properties in terms of impact resistance and the like, whereas, if the content of the continuous rubber-modified aromatic vinyl copolymer resin exceeds about 25 parts by weight relative to about 100 parts by weight of the polycarbonate resin, the thermoplastic resin composition can have poor properties in terms of flame retardancy, stiffness, and the like.

(C) Epoxy group-containing aromatic vinyl copolymer resin

The epoxy group-containing aromatic vinyl copolymer resin according to the present invention serves to improve properties of the thermoplastic resin composition, such as hydrolysis resistance, flame retardancy, impact resistance, heat resistance, fluidity, and balance therebetween, in combination with the polycarbonate resin, the continuous rubber-modified aromatic vinyl copolymer resin, the silicone rubber-modified vinyl graft copolymer, the diene rubber-modified vinyl graft copolymer, the alkoxysilane compound, and the phosphorus flame retardant. The epoxy group-containing aromatic vinyl copolymer resin may include an epoxy group-containing aromatic vinyl copolymer resin used in typical thermoplastic resin compositions.

In some embodiments, the epoxy group-containing aromatic vinyl copolymer resin is a resin prepared through a process allowing an unsaturated epoxy group to be present in an aromatic vinyl copolymer resin, and may be prepared by polymerization of a monomer mixture including an epoxy group-containing unsaturated epoxy compound and a vinyl compound including an aromatic vinyl monomer. Polymerization of the monomer mixture may be carried out by any typical polymerization method known in the art, such as emulsion polymerization, suspension polymerization, bulk polymerization, and the like.

In some embodiments, the epoxy group-containing unsaturated epoxy compound may include, for example, epoxy group-containing (meth)acrylates, such as glycidyl methacrylate, glycidyl acrylate, and the like. These may be used alone or as a mixture thereof. The epoxy group-containing unsaturated epoxy compound may be present in an amount of about 0.01 wt% to about 10 wt%, for example, about 0.05 wt% to about 5 wt%, specifically about 0.1 wt% to about 2 wt%, based on the total weight of the epoxy group-containing aromatic vinyl copolymer resin. Within this range, the thermoplastic resin composition can have good properties in terms of heat resistance, impact resistance, and the like.

In some embodiments, the vinyl compound may comprise an aromatic vinyl monomer and a monomer copolymerizable with the aromatic vinyl monomer. The vinyl compound may be present in an amount of about 90 wt% to about 99.99 wt%, for example, about 95 wt% to about 99.95 wt%, specifically about 98 wt% to about 99.9 wt%, based on the total weight of the epoxy group-containing aromatic vinyl copolymer resin. Within this range, thermoplastic resin composition can have good properties in terms of miscibility between the aforementioned components, fluidity, impact resistance, and the like.

In some embodiments, the aromatic vinyl monomer may include styrene, α-methylstyrene, β-methylstyrene, p-methylstyrene, p-t-butylstyrene, ethylstyrene, vinylxylene, monochlorostyrene, dichlorostyrene, dibromostyrene, vinyl naphthalene, and the like, without being limited thereto. These may be used alone or as a mixture thereof. The aromatic vinyl monomer may be present in an amount of about 40 wt% to about 95 wt%, for example, about 40 wt% to about 90 wt%, based on the total weight of the vinyl compound.

In some embodiments, the monomer copolymerizable with the aromatic vinyl monomer may include, for example, vinyl cyanide monomers, such as acrylonitrile, methacrylonitrile, ethacrylonitrile, phenylacrylonitrile, α-chloroacrylonitrile, fumaronitrile, and the like. These may be used alone or as a mixture thereof. The monomer copolymerizable with the aromatic vinyl monomer may be present in an amount of about 5 wt% to about 60 wt%, for example, about 10 wt% to about 60 wt%, based on the total weight of the vinyl compound.

In some embodiments, the epoxy group-containing aromatic vinyl copolymer resin may have a weight average molecular weight (Mw) of about 50,000 g/mol to about 200,000 g/mol, for example, about 10,000 g/mol to about 150,000 g/mol, as measured by gel permeation chromatography (GPC). Within this range, the thermoplastic resin composition can have good properties in terms of fluidity, impact resistance, and the like.

In some embodiments, the epoxy group-containing aromatic vinyl copolymer resin may be present in an amount of about 0.5 parts by weight to about 10 parts by weight, for example, about 1 part by weight to about 5 parts by weight, relative to about 100 parts by weight of the polycarbonate resin. If the content of the epoxy group-containing aromatic vinyl copolymer resin is less than about 0.5 parts by weight relative to about 100 parts by weight of the polycarbonate resin, the thermoplastic resin composition can have poor properties in terms of hydrolysis resistance, chemical resistance, and the like, whereas, if the content of the epoxy group-containing aromatic vinyl copolymer resin exceeds about 10 parts by weight relative to about 100 parts by weight of the polycarbonate resin, the thermoplastic resin composition can have poor properties in terms of flame retardancy, impact resistance, and the like.

(D) Silicone rubber-modified vinyl graft copolymer

The silicone rubber-modified vinyl graft copolymer according to one embodiment of the present invention serves to improve properties of the thermoplastic resin composition, such as hydrolysis resistance, flame retardancy, impact resistance, heat resistance, fluidity, and balance therebetween, in combination with the polycarbonate resin, the continuous rubber-modified aromatic vinyl copolymer resin, the epoxy group-containing aromatic vinyl copolymer resin, the diene rubber-modified vinyl graft copolymer, the alkoxysilane compound, and the phosphorus flame retardant. The silicone rubber-modified vinyl graft copolymer may include a silicone rubber-modified vinyl graft copolymer containing about 5 wt% to about 20 wt%, for example, about 5 wt% to about 15 wt%, of Si based on the total weight of the silicone rubber-modified vinyl graft copolymer. If the content of Si in the silicone rubber-modified vinyl graft copolymer is less than about 5 wt%, the thermoplastic resin composition can have poor properties in terms of hydrolysis resistance and the like, whereas, if the content of Si in the silicone rubber-modified vinyl graft copolymer exceeds about 20 wt%, the thermoplastic resin composition can have poor properties in terms of hydrolysis resistance, appearance, and the like.

In some embodiments, the silicone rubber-modified vinyl graft copolymer may be obtained by graft polymerization of an epoxy group-containing acrylate monomer as a shell to a silicone rubber polymer as a core, wherein the silicone rubber polymer has an average particle size ($D_{50}$, volume average) of about 100 nm to about 350 nm, for example, about 110 nm to about 300 nm, as measured using a transmission electron microscope (TEM) (device name: JEM-1400, manufacturer: JEOL Ltd.). Here, the graft polymerization process may be carried out by any typical polymerization method known in the art, such as emulsion polymerization, suspension polymerization, or the like. Within this range of average particle size of the silicone rubber polymer, the thermoplastic resin composition can have good properties in terms of impact resistance, appearance, and the like.

In some embodiments, the silicone rubber polymer may be prepared by polymerization of a rubber monomer including a silicone monomer, such as cyclosiloxane. The cyclosiloxane may include, for example, hexamethylcyclotrisiloxane, octamethylcyclotetrasiloxane, decamethylcyclopentasiloxane, dodecamethylcyclohexasiloxane, trimethyltriphenylcyclotrisiloxane, tetramethyltetraphenylcyclotetrasiloxane, octaphenylcyclotetrasiloxane, and the like. A curing agent used in polymerization of the rubber monomer may include, for example, trimethoxymethylsilane, triethoxyphenylsilane, tetramethoxysilane, or tetraethoxysilane. In addition, the silicone rubber polymer may include silicone-acrylate rubbers, such as polydimethylsiloxane/butylacrylate rubber (PDMS/BA), and the like.

In some embodiments, the epoxy group-containing acrylate monomer forming the shell may include glycidyl

methacrylate, glycidyl acrylate, and a combination thereof.

In some embodiments, in the silicone rubber-modified vinyl graft copolymer, the epoxy group-containing acrylate monomer (shell) may be present in an amount of about 50 parts by weight to about 200 parts by weight, for example, about 60 parts by weight to about 150 parts by weight, relative to about 100 parts by weight of the rubber polymer (core). Within this range, the thermoplastic resin composition can have good properties in terms of impact resistance, fluidity, flame retardancy, hydrolysis resistance, and the like.

In some embodiments, the silicone rubber-modified vinyl graft copolymer may be present in an amount of about 0.1 parts by weight to about 6 parts by weight, for example, about 0.2 parts by weight to about 5 parts by weight, relative to about 100 parts by weight of the polycarbonate resin. If the content of the silicone rubber-modified vinyl graft copolymer is less than about 0.1 parts by weight relative to about 100 parts by weight of the polycarbonate resin, the thermoplastic resin composition can have good properties in terms of hydrolysis resistance and the like, whereas, if the content of the silicone rubber-modified vinyl graft copolymer exceeds about 6 parts by weight relative to about 100 parts by weight of the polycarbonate resin, the thermoplastic resin composition can have good properties in terms of hydrolysis resistance, flame retardancy, appearance, and the like.

(E) Diene rubber-modified vinyl graft copolymer

The diene rubber-modified vinyl graft copolymer according to one embodiment of the present invention serves to improve properties of the thermoplastic resin composition, such as hydrolysis resistance, flame retardancy, impact resistance, heat resistance, fluidity, and balance therebetween, in combination with the polycarbonate resin, the continuous rubber-modified aromatic vinyl copolymer resin, the epoxy group-containing aromatic vinyl copolymer resin, the silicone rubber-modified vinyl graft copolymer, the alkoxysilane compound, and the phosphorus flame retardant. For example, the diene rubber-modified vinyl graft copolymer may be obtained by graft polymerization of a monomer mixture including an aromatic vinyl monomer and methyl methacrylate to a diene rubber polymer. The monomer mixture may further comprise a vinyl cyanide monomer and/or a monomer for imparting processability and heat resistance, as needed. Here, the graft polymerization process may be carried out by a typical polymerization method known in the art, such as emulsion polymerization, suspension polymerization, and the like. In addition, the diene rubber-modified vinyl graft copolymer may have a core-shell structure including the rubber polymer as a core and a copolymer of the monomer mixture as a shell.

In some embodiments, the diene rubber polymer may include, for example, diene rubbers, such as polybutadiene, poly(styrene-butadiene), poly(acrylonitrile-butadiene), and the like, saturated rubbers obtained by hydrogenation of the diene rubbers, and the like. These may be used alone or as a mixture thereof. For example, the diene rubber polymer may include polybutadiene rubber. The diene rubber polymer (rubber particles) may have an average particle size of about 200 nm to about 400 nm, for example, about 220 nm to about 380 nm. Within this range, the thermoplastic resin composition can have good properties in terms of impact resistance, appearance, fluidity, and the like. Here, the average particle size of the diene rubber polymer may be measured on a specimen in a latex state by light scattering particle size analysis. Specifically, the average particle size of the diene rubber polymer may be determined by filtering a latex of the rubber polymer through a mesh to remove coagulant formed during polymerization of the rubber polymer, placing a mixed solution of 0.5 g of the latex and 30 ml of distilled water in a 1,000 ml flask, filling the flask with distilled water to prepare a specimen, transferring 10 ml of the specimen to a quartz cell, and measuring the average particle diameter of the specimen using a light scattering particle size analyzer (Nano-ZS, Malvern Instruments Ltd.).

**In** some embodiments, the diene rubber polymer may be present in an amount of about 35 wt% to about 80 wt%, for example, about 40 wt% to about 75 wt%, based on the total weight of the diene rubber-modified aromatic vinyl graft copolymer. Within this range, the thermoplastic resin composition can have good mechanical properties and good molding processability.

**In** some embodiments, the aromatic vinyl monomer is graft-copolymerizable with the rubber polymer and may include, for example, styrene, α-methylstyrene, β-methylstyrene, p-methylstyrene, p-t-butylstyrene, ethylstyrene, vinylxylene, monochlorostyrene, dichlorostyrene, dibromostyrene, vinylnaphthalene, and combinations thereof. Specifically, the aromatic vinyl monomer may include styrene and the like. The aromatic vinyl monomer may be present in an amount of about 2 wt% to about 40 wt%, for example, about 5 wt% to about 35 wt%, based on the total weight of the diene rubber-modified aromatic vinyl-based graft copolymer. Within this range, the thermoplastic resin composition can have good excellent mechanical properties and good molding processability.

In some embodiments, the methyl methacrylate may be present in an amount of about 1 wt% to about 25 wt%, for example, about 1 wt% to about 20 wt%, based on the total weight of the diene rubber-modified aromatic vinyl graft copolymer. Within this range, the thermoplastic resin composition can have good excellent mechanical properties and good molding processability.

In some embodiments, the vinyl cyanide monomer is copolymerizable with the aromatic vinyl monomer and may include, for example, acrylonitrile, methacrylonitrile, ethacrylonitrile, phenylacrylonitrile, α-chloroacrylonitrile, fumaronitrile, and the like. These may be used alone or as a mixture thereof. For example, the vinyl cyanide monomer may include acrylonitrile, methacrylonitrile, and the like.

In some embodiments, the monomer for imparting processability and heat resistance may include, for example, maleic anhydride, N-substituted maleimide, and the like.

In some embodiments, the vinyl cyanide monomer and/or the monomer for imparting processability and heat resistance may be optionally present in an amount of about 15 wt% or less, for example, about 0.1 wt% to about 10 wt%, based on the total weight of the diene rubber-modified aromatic vinyl graft copolymer. Within this range, the vinyl cyanide monomer and/or the monomer for imparting processability and heat resistance can provide processability, heat resistance, and the like to the thermoplastic resin composition without deterioration in other properties of the thermoplastic resin composition.

In some embodiments, the diene rubber-modified vinyl graft copolymer may include, for example, a copolymer (g-MBS) obtained by graft polymerization of methyl methacrylate and styrene to a butadiene rubber polymer.

In some embodiments, the diene rubber-modified vinyl graft copolymer may be present in an amount of about 0.1 parts by weight to about 5 parts by weight, for example, about 0.5 parts by weight to about 4 parts by weight, relative to about 100 parts by weight of the polycarbonate resin. If the content of the diene rubber-modified vinyl graft copolymer is less than about 0.1 parts by weight relative to about 100 parts by weight of the polycarbonate resin, the thermoplastic resin composition can have poor properties in terms of impact resistance and the like, whereas, if the content of the diene rubber-modified vinyl graft copolymer exceeds about 5 parts by weight relative to about 100 parts by weight of the polycarbonate resin, the thermoplastic resin composition can have poor properties in terms of hydrolysis resistance, flame retardancy, and the like.

(F) Alkoxysilane compound

The alkoxysilane compound according to one embodiment of the present invention serves to improve properties of the thermoplastic resin composition, such as hydrolysis resistance, flame retardancy, impact resistance, heat resistance, fluidity, and balance therebetween, in combination with the polycarbonate resin, the continuous rubber-modified aromatic vinyl copolymer resin, the epoxy group-containing aromatic vinyl copolymer resin, the silicone rubber-modified vinyl graft copolymer, the diene rubber-modified vinyl graft copolymer, and the phosphorus flame retardant.

In some embodiments, the alkoxysilane compound may include, for example, glycidoxypropyltrimethoxysilane, 3,4-epoxycyclohexylethyltrimethoxysilane, glycidoxypropyldiethoxysilane, glycidoxypropyltriethoxysilane, and combinations thereof. Preferably, the alkoxysilane compound includes glycidoxypropyltrimethoxysilane and the like.

In some embodiments, the alkoxysilane compound may be present in an amount of about 0.05 parts by weight to about 3.5 parts by weight, for example, about 0.1 parts by weight to about 2 parts by weight, relative to about 100 parts by weight of the polycarbonate resin. If the content of the alkoxysilane compound is less than about 0.05 parts by weight relative to about 100 parts by weight of the polycarbonate resin, the thermoplastic resin composition can have poor properties in terms of hydrolysis resistance and the like, whereas, if the content of the alkoxysilane compound exceeds about 3.5 parts by weight relative to about 100 parts by weight of the polycarbonate resin, the thermoplastic resin composition can have poor properties in terms of hydrolysis resistance, flame retardancy, heat resistance, and the like.

(G) Phosphorus flame retardant

The phosphorus flame retardant according to one embodiment of the present invention serves to improve properties of the thermoplastic resin composition, such as hydrolysis resistance, flame retardancy, impact resistance, heat resistance, fluidity, and balance therebetween, in combination with the polycarbonate resin, the continuous rubber-modified aromatic vinyl copolymer resin, the epoxy group-containing aromatic vinyl copolymer resin, the silicone rubber-modified vinyl graft copolymer, the diene rubber-modified vinyl graft copolymer, and the alkoxysilane compound. The phosphorus flame retardant may include a phosphorus flame retardant used in typical flame retardant thermoplastic resin compositions.

In some embodiments, the phosphorus flame retardant may include phosphate compounds, phosphonate compounds, phosphinate compounds, phosphine oxide compounds, phosphazene compounds, metal salts thereof, and the like. These may be used alone or as a mixture thereof.

In some embodiments, the phosphorus flame retardant may comprise an aromatic phosphoric acid ester compound represented by Formula 1.

[Formula 1]

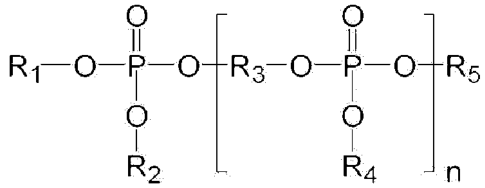

In Formula 1, $R_1$, $R_2$, $R_4$ and $R_5$ are each independently a hydrogen atom, a $C_6$ to $C_{20}$ aryl group, or a $C_1$ to $C_{10}$ alkyl group-substituted $C_6$ to $C_{20}$ aryl group, $R_3$ is a $C_6$ to $C_{20}$ arylene group or a $C_1$ to $C_{10}$ alkyl group-substituted $C_6$ to $C_{20}$ arylene group, for example, a derivative of a dialcohol such as resorcinol, hydroquinone, bisphenol-A, and bisphenol-S, and n is an integer of 0 to 10, for example, 0 to 4.

When n is 0, the aromatic phosphoric acid ester compound represented by Formula 1 may include, for example, diaryl phosphate, such as diphenyl phosphate and the like, triphenyl phosphate, tricresyl phosphate, trixylenyl phosphate, tri(2,6-dimethylphenyl) phosphate, tri(2,4,6-trimethylphenyl) phosphate, tri(2,4-di-tert-butylphenyl) phosphate, tri(2,6-dimethylphenyl) phosphate, and the like, without being limited thereto. When n is 1, the aromatic phosphoric acid ester compound represented by Formula 1 may include, for example, bisphenol-A bis(diphenyl phosphate), resorcinol bis(diphenyl phosphate), resorcinol bis[bis(2,6-dimethylphenyl) phosphate], resorcinol bis[bis(2,4-di-tert-butylphenyl) phosphate], hydroquinone bis[bis(2,6-dimethylphenyl) phosphate], hydroquinone bis[bis(2,4-di-tert-butylphenyl) phosphate], and the like, without being limited thereto. These may be used alone or as a mixture thereof.

In some embodiments, the phosphorus flame retardant may be present in an amount of about 1 part by weight to about 30 parts by weight, for example, about 5 parts by weight to about 25 parts by weight, relative to about 100 parts by weight of the polycarbonate resin. If the content of the phosphorus flame retardant is less than about 1 part by weight relative to about 100 parts by weight of the polycarbonate resin, the thermoplastic resin composition can have poor properties in terms of flame retardancy, fluidity, and the like, whereas, if the content of the phosphorus flame retardant exceeds about 30 parts by weight relative to about 100 parts by weight of the polycarbonate resin, the thermoplastic resin composition can have good properties in terms of hydrolysis resistance, flame retardancy, heat resistance, injection moldability, and the like.

The thermoplastic resin composition of the present invention may have an Si content of about 0.02 wt% to about 0.6 wt%, for example, about 0.03 wt% to about 0.5 wt%, based on the total weight of the thermoplastic resin composition. If the Si content of the thermoplastic resin composition is less than about 0.02 wt%, the thermoplastic resin composition can have poor properties in terms of hydrolysis resistance and the like, whereas, if the Si content of the thermoplastic resin composition exceeds about 0.6 wt%, the thermoplastic resin composition can have poor properties in terms of hydrolysis resistance, flame retardancy, heat resistance, injection moldability, and the like. Here, the Si content is obtained by placing 5 g of a sample of the thermoplastic resin composition in a disc-shaped container (diameter: 2 cm), compressing the sample using a press, and measuring the Si content of the sample using an X-ray fluorescence spectrometer (device name: Tracer 5, manufacturer: Bruker Corp.).

According to one embodiment of the present invention, the thermoplastic resin composition may further comprise additives used in typical thermoplastic resin compositions. The additives may include, for example, anti-dripping agents, antioxidants, lubricants, release agents, nucleating agents, stabilizers, antistatic agents, pigments, dyes, and mixtures thereof, without being limited thereto. The additives may be optionally present in an amount of about 0.001 parts by weight to about 40 parts by weight, for example, about 0.1 parts by weight to about 10 parts by weight, relative to about 100 parts by weight of the polycarbonate resin.

According to one embodiment of the present invention, the thermoplastic resin composition may be prepared in pellet form by mixing the aforementioned components, followed by melt extrusion in a typical twin screw extruder at a temperature of about 200°C to about 280°C, for example, about 220°C to about 250°C.

In some embodiments, the thermoplastic resin composition may have a melt-flow index increase rate of about 33% or less, for example, about 1% to about 30%, as calculated according to Equation 1.

[Equation 1]

$$\text{Melt-flow index increase rate (\%)} = ((MI_1 - MI_0)/MI_0) \times 100$$

In Equation 1, $MI_0$ is a melt-flow index of a specimen of the thermoplastic resin composition, as measured at a temperature of 220°C under a load of 10 kgf in accordance with ASTM D1238, and $MI_1$ is a melt-flow index of the specimen, as measured at a temperature of 220°C under a load of 10 kgf in accordance with ASTM D1238 after leaving the specimen

at 85°C and 85% RH for 144 hours.

In some embodiments, the thermoplastic resin composition may have a flame retardancy of V-0 or greater, as measured on a 1.5 mm thick specimen by the UL-94 vertical burning test method.

In some embodiments, the thermoplastic resin composition may have a notched Izod impact strength of about 10 kgf·cm/cm to about 85 kgf·cm/cm, for example, about 10 kgf·cm/cm to about 80 kgf·cm/cm, as measured on a 1/8" thick specimen in accordance with ASTM D256.

In some embodiments, the thermoplastic resin composition may have a Vicat softening temperature of about 90°C to about 140°C, for example, about 90°C to about 130°C, as measured at a heating rate of 50°C/hr under a load of 5 kgf in accordance with ISO 306.

In some embodiments, the thermoplastic resin composition may have a melt-flow index of about 10 g/10 min to about 60 g/10 min, for example, about 15 g/10 min to about 50 g/10 min, as measured on a specimen at a temperature of 220°C under a load of 10 kgf in accordance with ASTM D1238.

A molded product according to the present invention is formed of the thermoplastic resin composition described above. The thermoplastic resin composition may be prepared in pellet form. The prepared pellets may be manufactured into various molded products (articles) by various molding methods, such as injection molding, extrusion, vacuum molding, casting, and the like. These molding methods are well known to those having ordinary knowledge in the art to which the present invention pertains. The molded product has good properties in terms of hydrolysis resistance, flame retardancy, impact resistance, heat resistance, fluidity (molding processability), and balance therebetween and thus is useful as interior/exterior materials for electrical/electronic products, interior/exterior materials for automobiles, exterior materials for buildings, and the like.

[Mode for Invention]

Next, the present invention will be described in more detail with reference to some examples. However, it should be noted that these examples are provided for illustration only and are not to be construed in any way as limiting the present invention.

## EXAMPLE

Details of components used in Examples and Comparative Examples are as follows:

(A) Polycarbonate resin

A bisphenol-A polycarbonate resin (weight average molecular weight (Mw): about 25,000 g/mol) was used.

(B) Continuous rubber-modified aromatic vinyl copolymer resin

After 8.8 parts by weight of a butadiene rubber (BR-2, viscosity in a solution containing 5 wt% of styrene: 45 cP, ASAPRENE 700A) was dissolved in a mixture of 53.4 wt% of a styrene monomer, 17.8 wt% of an acrylonitrile monomer, and 20 wt% of ethylbenzene as a reaction solvent, 0.015 parts by weight of 1,1-bis(t-butylperoxy)cyclohexane as a polymerization initiator and 0.07 parts by weight of t-dodecyl mercaptan as a molecular weight regulator were added to the resulting mixture, thereby preparing a mixed solution. The prepared mixed solution was introduced into a first reactor at a rate of 25 kg/hr. In the first reactor, the mixed solution was polymerized to a conversion of 35% under stirring at a rate of 130 rpm. Thereafter, the resulting product was introduced into a second reactor, followed by polymerization to a conversion of 75% under stirring at a rate of 70 rpm. Thereafter, unreacted residues was removed through a devolatilization tank, thereby preparing a continuous rubber-modified aromatic vinyl copolymer resin in pellet form (C-ABS resin, a mixture of a large-diameter rubber polymer (dispersed phase) and an aromatic vinyl copolymer resin (SAN resin, continuous phase), dispersed phase:continuous phase: 12 wt% : 88 wt%). The prepared large-diameter rubber polymer had an average particle size of 1,370 nm, and the SAN resin had a weight average molecular weight of 130,000 g/mol. Here, the average particle size of the large-diameter rubber polymer refers to a volume average particle size (D50) measured using a particle size analyzer (Mastersizer S Ver.2.14, Malvern Instruments Ltd.).

(C) Epoxy group-containing aromatic vinyl copolymer resin

A glycidyl methacrylate-styrene-acrylonitrile copolymer (GMA-SAN, polymerization product of 0.5 mol% of glycidylmethacrylate and 99.5 mol% of styrene and acrylonitrile (styrene:acrylonitrile (weight ratio) = 85:15)), weight average molecular weight: 115,000 g/mol) was used.

(D) Silicone rubber-modified vinyl graft copolymer

(D1) A silicone rubber-modified vinyl graft copolymer (Si content: 10 wt%, core: silicone rubber polymer (polydimethylsiloxane/butyl acrylate rubber (PDMS/BA), product name: METABLEN™ S-2001, manufacturer: Mitsubishi Chemical Holdings) was used.
(D2) A silicone rubber-modified vinyl graft copolymer (Si content: 3.4 wt%, product name: M650, manufacturer: Shanghai Pushing Polymer Materials) was used.
(D3) A silicone rubber-modified vinyl graft copolymer (Si content: 25 wt% or more, product name: METABLEN™ SX-005, manufacturer: Mitsubishi Chemical Holdings) was used.

(E) Diene rubber-modified vinyl graft copolymer

(E1) A g-MBS copolymer formed by graft polymerization of styrene and methyl methacrylate as a shell to a polybutadiene rubber (PBR) as a core (product name: METABLEN™ C-223A, manufacturer: Mitsubishi Chemical Holdings) was used.
(E2) A g-ABS copolymer formed by graft polymerization of 55 wt% of styrene and acrylonitrile (weight ratio: 75/25) as a shell to 45 wt% of a polybutadiene rubber (PBR) as a core (average particle size: 310 nm) was used.

(F) Alkoxysilane compound

Glycidoxypropyltrimethoxysilane (product name: Silquest A-187, manufacturer: Momentive) was used.

(G) Phosphorus flame retardant

Oligomeric bisphenol-A diphosphate (product name: SR-BDP, manufacturer: Sunris New Materials) was used.

**Examples 1 to 13 and Comparative Examples 1 to 17**

The aforementioned components were mixed in amounts as listed in Tables 1 and 2, followed by melt extrusion at 250°C, thereby preparing a thermoplastic resin composition in pellet form. Here, extrusion was performed using a twin screw extruder (L/D: 36, Φ: 45 mm). The prepared pellets were dried at 80°C for 2 hours or more and then subjected to injection molding using a 6 oz. injection machine (molding temperature: 250°C, mold temperature: 60°C), thereby preparing a specimen. The prepared specimen was evaluated as to the following properties. Results are shown in Tables 1 and 2.

Property evaluation

(1) Hydrolysis resistance (melt-flow index increase rate): Melt-flow index increase rate (unit: %) was calculated according to Equation 1.

[Equation 1]

$$\text{Melt-flow index increase rate (\%)} = ((MI_1 - MI_0) / MI0) \times 100$$

In Equation 1, $MI_0$ is a melt-flow index of a specimen of the thermoplastic resin composition, as measured at a temperature of 220°C under a load of 10 kgf in accordance with ASTM D1238, and $MI_1$ is a melt-flow index of the specimen, as measured at a temperature of 220°C under a load of 10 kgf in accordance with ASTM D1238 after leaving the specimen at 85°C and 85% RH for 144 hours.
(2) Flame Retardancy: Flame retardancy was measured on a 1.5 mm thick specimen by the UL-94 vertical burning test method.
(3) Notched Izod impact strength (unit: kgf·cm/cm): Notched Izod impact strength was measured on a 1/8" thick specimen in accordance with ASTM D256.
(4) Vicat softening temperature (unit: °C): Vicat softening temperature was measured at a heating rate of 50°C/hr under a load of 5 kgf in accordance with ISO 306.
(5) Melt-flow index (MI, unit: g/10 min): Melt-flow index was measured on a specimen at a temperature of 220°C under

a load of 10 kgf in accordance with ASTM D1238.

Table 1

| | Example | | | | | | |
|---|---|---|---|---|---|---|---|
| | 1 | 2 | 3 | 4 | 5 | 6 | 7 |
| (A) (parts by weight) | 100 | 100 | 100 | 100 | 100 | 100 | 100 |
| (B) (parts by weight) | 5 | 14 | 20 | 14 | 14 | 14 | 14 |
| (C) (parts by weight) | 2.3 | 2.3 | 2.3 | 1 | 5 | 2.3 | 2.3 |
| (D1) (parts by weight) | 1.2 | 1.2 | 1.2 | 1.2 | 1.2 | 0.2 | 5 |
| (D2) (parts by weight) . | - | - | - | - | - | - | - |
| (D3) (parts by weight) . | - | - | - | - | - | - | - |
| (E1) (parts by weight) | 2.3 | 2.3 | 2.3 | 2.3 | 2.3 | 2.3 | 2.3 |
| (E2) (parts by weight) | - | - | - | - | - | - | - |
| (F) (parts by weight) | 0.3 | 0.3 | 0.3 | 0.3 | 0.3 | 0.3 | 0.3 |
| (G) (parts by weight) | 15 | 15 | 15 | 15 | 15 | 15 | 15 |
| Si content (wt%) | 0.124 | 0.115 | 0.110 | 0.117 | 0.113 | 0.042 | 0.386 |
| Melt-flow index increase rate | 5 | 9 | 20 | 2 | 8 | 5 | 20 |
| Flame Retardancy | V-0 | V-0 | V-0 | V-0 | V-0 | V-0 | V-0 |
| Notched Izod impact strength | 10 | 70 | 80 | 70 | 20 | 60 | 80 |
| Vicat softening temperature | 118 | 109 | 100 | 110 | 105 | 109 | 107 |
| Melt-flow index | 35 | 27 | 22 | 27 | 30 | 30 | 25 |

Table 2

| | Example | | | | | |
|---|---|---|---|---|---|---|
| | 8 | 9 | 10 | 11 | 12 | 13 |
| (A) (parts by weight) | 100 | 100 | 100 | 100 | 100 | 100 |
| (B) (parts by weight) | 14 | 14 | 14 | 14 | 14 | 14 |
| (C) (parts by weight) | | 2.3 | 2.3 | 2.3 | 2.3 | 2.3 |
| (D1) (parts by weight) | 1.2 | 1.2 | 1.2 | 1.2 | 1.2 | 1.2 |
| (D2) (parts by weight) | - | - | - | - | - | - |
| (D3) (parts by weight) | - | - | - | - | - | - |
| (E1) (parts by weight) | 0.5 | 4 | 2.3 | 2.3 | 2.3 | 2.3 |
| (E2) (parts by weight) | - | - | - | - | - | - |
| (F) (parts by weight) | 0.3 | 0.3 | 0.1 | 2 | 0.3 | 0.3 |
| (G) (parts by weight) | 15 | 15 | 15 | 15 | 5 | 25 |
| Si content (wt%) | 0.119 | 0.114 | 0.098 | 0.263 | 0.125 | 0.108 |
| Melt-flow index increase rate | 5 | 30 | 30 | 25 | 8 | 5 |
| Flame Retardancy | V-0 | V-0 | V-0 | V-0 | V-0 | V-0 |
| Notched Izod impact strength | 15 | 80 | 80 | 50 | 20 | 60 |
| Vicat softening temperature | 118 | 109 | 105 | 100 | 125 | 90 |

(continued)

| | Example | | | | | |
|---|---|---|---|---|---|---|
| | 8 | 9 | 10 | 11 | 12 | 13 |
| Melt-flow index | 35 | 22 | 29 | 33 | 15 | 50 |

Table 3

| | Comparative Example | | | | | |
|---|---|---|---|---|---|---|
| | 1 | 2 | 3 | 4 | 5 | 6 |
| (A) (parts by weight) | 100 | 100 | 100 | 100 | 100 | 100 |
| (B) (parts by weight) | 0.5 | 27 | 14 | 14 | 14 | 14 |
| (C) (parts by weight) | 2.3 | 2.3 | 0.1 | 12 | 2.3 | 2.3 |
| (D1) (parts by weight) | 1.2 | 1.2 | 1.2 | 1.2 | 0.05 | 7 |
| (D2) (parts by weight) | - | - | - | - | - | - |
| (D3) (parts by weight) | - | - | - | - | - | - |
| (E1) (parts by weight) | 2.3 | 2.3 | 2.3 | 2.3 | 2.3 | 2.3 |
| (E2) (parts by weight) | - | - | - | - | - | - |
| (F) (parts by weight) | 0.3 | 0.3 | 0.3 | 0.3 | 0.3 | 0.3 |
| (G) (parts by weight) | 15 | 15 | 15 | 15 | 15 | 15 |
| Si content (wt%) | 0.128 | 0.105 | 0.117 | 0.108 | 0.031 | 0.522 |
| Melt-flow index increase rate | 10 | 15 | 60 | 10 | 40 | 65 |
| Flame Retardancy | V-0 | V-2 | V-0 | V-2 | V-0 | V-2 |
| Notched Izod impact strength | 8 | 50 | 60 | 8 | 70 | 80 |
| Vicat softening temperature | 120 | 90 | 109 | 90 | 109 | 102 |
| Melt-flow index | 25 | 25 | 27 | 35 | 27 | 22 |

Table 4

| | Comparative Example | | | | |
|---|---|---|---|---|---|
| | 7 | 8 | 9 | 10 | 11 |
| (A) (parts by weight) | 100 | 100 | 100 | 100 | 100 |
| (B) (parts by weight) | 14 | 14 | 14 | 14 | 14 |
| (C) (parts by weight) | 2.3 | 2.3 | 2.3 | 2.3 | 2.3 |
| (D1) (parts by weight) | - | - | 1.2 | 1.2 | 1.2 |
| (D2) (parts by weight) | 1.2 | - | - | - | - |
| (D3) (parts by weight) | - | 1.2 | - | - | - |
| (E1) (parts by weight) | 2.3 | 2.3 | 0.05 | 7 | - |
| (E2) (parts by weight) | - | - | - | - | 2.3 |
| (F) (parts by weight) | 0.3 | 0.3 | 0.3 | 0.3 | 0.3 |
| (G) (parts by weight) | 15 | 15 | 15 | 15 | 15 |
| Si content (wt%) | 0.056 | 0.471 | 0.117 | 0.112 | 0.115 |
| Melt-flow index increase rate | 35 | 40 | 9 | 50 | 40 |
| Flame Retardancy | V-0 | V-0 | V-0 | V-2 | V-0 |
| Notched Izod impact strength | 70 | 70 | 8 | 70 | 70 |

(continued)

| | Comparative Example | | | | |
|---|---|---|---|---|---|
| | 7 | 8 | 9 | 10 | 11 |
| Vicat softening temperature | 109 | 109 | 111 | 100 | 109 |
| Melt-flow index | 27 | 27 | 30 | 22 | 27 |

Table 5

| | Comparative Example | | | | | |
|---|---|---|---|---|---|---|
| | 12 | 13 | 14 | 15 | 16 | 17 |
| (A) (parts by weight) | 100 | 100 | 100 | 100 | 100 | 100 |
| (B) (parts by weight) | 14 | 14 | 14 | 14 | 14 | 14 |
| (C) (parts by weight) | 2.3 | 2.3 | 2.3 | 2.3 | 2.3 | 2.3 |
| (D1) (parts by weight) | 1.2 | 1.2 | 1.2 | 1.2 | 0.1 | 6 |
| (D2) (parts by weight) | - | - | - | - | - | - |
| (D3) (parts by weight) | - | - | - | - | - | - |
| (E1) (parts by weight) | 2.3 | 2.3 | 2.3 | 2.3 | 2.3 | 2.3 |
| (E2) (parts by weight) | - | - | - | - | - | - |
| (F) (parts by weight) | 0.04 | 4 | 0.3 | 0.3 | 0.05 | 3.5 |
| (G) (parts by weight) | 15 | 15 | 0.5 | 32 | 15 | 15 |
| Si content (wt%) | 0.093 | 0.432 | 0.129 | 0.102 | 0.012 | 0.713 |
| Melt-flow index increase rate | 60 | 60 | 9 | 100 | 50 | 100 |
| Flame Retardancy | V-0 | V-2 | V-2 | V-2 | V-0 | V-2 |
| Notched Izod impact strength | 70 | 10 | 80 | 8 | 70 | 20 |
| Vicat softening temperature | 109 | 85 | 140 | 80 | 109 | 87 |
| Melt-flow index | 27 | 37 | 5 | 88 | 27 | 80 |

From the results shown in Tables 1 and 2, it can be seen that the thermoplastic resin composition according to the present invention had good properties in terms of hydrolysis resistance, flame retardancy, impact resistance, heat resistance, fluidity, and balance therebetween.

Conversely, the thermoplastic resin composition of Comparative Example 1, in which the content of the continuous rubber-modified aromatic vinyl copolymer resin was less than the range according to the present invention, had poor properties in terms of impact resistance and the like; the thermoplastic resin composition of Comparative Example 2, in which the content of the continuous rubber-modified aromatic vinyl copolymer resin exceeded the range according to the present invention, had poor properties in terms of flame retardancy and the like; the thermoplastic resin composition of Comparative Example 3, in which the content of the epoxy group-containing aromatic vinyl copolymer resin was less than the range according to the present invention, had poor properties in terms of hydrolysis resistance and the like; the thermoplastic resin composition of Comparative Example 4, in which the content of the epoxy group-containing aromatic vinyl copolymer resin exceeded the range according to the present invention, had poor properties in terms of flame retardancy, impact resistance, and the like; the thermoplastic resin composition of Comparative Example 5, in which the content of the silicone rubber-modified vinyl graft copolymer was less than the range according to the present invention, had poor properties in terms of hydrolysis resistance and the like; the thermoplastic resin composition of Comparative Example 6, in which the content of the silicone rubber-modified vinyl graft copolymer exceeded the range according to the present invention, had poor properties in terms of hydrolysis resistance, flame retardancy, and the like; the thermoplastic resin composition of Comparative Example 7, in which the silicone rubber-modified vinyl graft copolymer (D2) was used instead of the silicone rubber-modified vinyl graft copolymer according to the present invention, had poor properties in terms of hydrolysis resistance and the like; and the thermoplastic resin composition of Comparative Example 8, in which the silicone rubber-modified vinyl graft copolymer (D3) was used instead of the silicone rubber-modified vinyl graft copolymer according to the present invention, had poor properties in terms of hydrolysis resistance, and the like. In

addition, the thermoplastic resin composition of Comparative Example 9, in which the content of the diene rubber-modified vinyl graft copolymer was less than the range according to the present invention, had poor properties in terms of impact resistance and the like; the thermoplastic resin composition of Comparative Example 10, in which the content of the diene rubber-modified vinyl graft copolymer exceeded the range according to the present invention, had poor properties in terms of hydrolysis resistance, flame retardancy, and the like; and the thermoplastic resin composition of Comparative Example 11, in which the g-ABS copolymer (E2) was used instead of the diene rubber-modified vinyl graft copolymer according to the present invention, had poor properties in terms of hydrolysis resistance and the like. In addition, the thermoplastic resin composition of Comparative Example 12, in which the content of the alkoxysilane compound was less than the range according to the present invention, had poor properties in terms of hydrolysis resistance and the like; the thermoplastic resin composition of Comparative Example 13, in which the content of the alkoxysilane compound exceeded the range according to the present invention, had poor properties in terms of hydrolysis resistance, flame retardancy, heat resistance, and the like; the thermoplastic resin composition of Comparative Example 14, in which the content of the phosphorus flame retardant was less than the range according to the present invention, had poor properties in terms of flame retardancy, fluidity, and the like; and the thermoplastic resin composition of Comparative Example 15, in which the content of the phosphorus flame retardant exceeded the range according to the present invention, had poor properties in terms of hydrolysis resistance, flame retardancy, impact resistance, heat resistance, injection moldability (melt-flow index increase rate), and the like. In addition, the thermoplastic resin composition of Comparative Example 16, in which the content of Si was less than the range according to the present invention although the content of each of the aforementioned components fell within the range according to the present invention, had poor properties in terms of hydrolysis resistance, and the like; and the thermoplastic resin composition of Comparative Example 17, in which the content of Si exceeded the range according to the present invention although the content of each of the aforementioned components fell within the range according to the present invention, had poor properties in terms of hydrolysis resistance, flame retardancy, heat resistance, injection moldability (melt-flow index increase rate), and the like.

Although some embodiments have been described herein, it will be understood by those skilled in the art that various modifications, changes, and alterations can be made without departing from the spirit and scope of the invention. Therefore, it should be understood that these embodiments are provided for illustration only and are not to be construed in any way as limiting the present invention. The scope of the present invention should be defined by the appended claims rather than by the foregoing description, and the claims and equivalents thereto are intended to cover such modifications and the like as would fall within the scope of the present invention.

## Claims

**1.** A thermoplastic resin composition comprising:

about 100 parts by weight of a polycarbonate resin;
about 1 part by weight to about 25 parts by weight of a continuous rubber-modified aromatic vinyl copolymer resin comprising a large-diameter rubber polymer having an average particle size of about 500 nm to about 3,000 nm and an aromatic vinyl copolymer resin;
about 0.5 parts by weight to about 10 parts by weight of an epoxy group-containing aromatic vinyl copolymer resin;
about 0.1 parts by weight to about 6 parts by weight of a silicone rubber-modified vinyl graft copolymer containing about 5 wt% to about 20 wt% of Si;
about 0.1 parts by weight to about 5 parts by weight of a diene rubber-modified vinyl graft copolymer prepared by graft polymerization of a monomer mixture comprising an aromatic vinyl monomer and methyl methacrylate to a diene rubber polymer;
about 0.05 parts by weight to about 3.5 parts by weight of an alkoxysilane compound; and
about 1 part by weight to about 30 parts by weight of a phosphorus flame retardant,
wherein the content of Si is about 0.02 wt% to about 0.6 wt% based on the total weight of the thermoplastic resin composition.

**2.** The thermoplastic resin composition according to claim 1, wherein the continuous rubber-modified aromatic vinyl copolymer resin is a mixture in which the large-diameter rubber polymer having an average particle size of about 500 nm to about 3,000 nm is present as a dispersed phase and the aromatic vinyl copolymer resin is present as a continuous phase, the large-diameter rubber polymer being prepared by continuous solution polymerization of a rubber polymer having a viscosity of about 40 cP to about 80 cP in a solution containing 5 wt% of styrene with an aromatic vinyl monomer and a monomer copolymerizable with the aromatic vinyl monomer.

**3.** The thermoplastic resin composition according to claim 1 or 2, wherein the epoxy group-containing aromatic vinyl

copolymer resin is prepared by polymerization of an epoxy group-containing (meth)acrylate with an aromatic vinyl monomer and a monomer copolymerizable with the aromatic vinyl monomer.

**4.** The thermoplastic resin composition according to any one of claims 1 to 3, wherein the silicone rubber-modified vinyl graft copolymer is prepared by graft polymerization of an alkyl (meth)acrylate monomer to a silicone rubber polymer.

**5.** The thermoplastic resin composition according to any one of claims 1 to 4, wherein the alkoxysilane compound comprises at least one of glycidoxypropyltrimethoxysilane, 3,4-epoxycyclohexylethyltrimethoxysilane, glycidoxypropyldiethoxysilane, and glycidoxypropyltriethoxysilane.

**6.** The thermoplastic resin composition according to any one of claims 1 to 5, wherein the phosphorus flame retardant comprises at least one of phosphate compounds, phosphonate compounds, phosphinate compounds, phosphine oxide compounds, and phosphazene compounds.

**7.** The thermoplastic resin composition according to any one of claims 1 to 6, wherein the thermoplastic resin composition has a melt-flow index increase rate of about 33% or less, as calculated according to Equation 1:

[Equation 1]

$$\text{Melt-flow index increase rate (\%)} = ((MI_1 - MI_0)/MI_0) \times 100$$

where $MI_0$ is a melt-flow index of a specimen of the thermoplastic resin composition, as measured at a temperature of 220°C under a load of 10 kgf in accordance with ASTM D1238, and $MI_1$ is a melt-flow index of the specimen, as measured at a temperature of 220°C under a load of 10 kgf in accordance with ASTM D1238 after leaving the specimen at 85°C and 85% RH for 144 hours.

**8.** The thermoplastic resin composition according to any one of claims 1 to 7, wherein the thermoplastic resin composition has a flame retardancy of V-0 or greater, as measured on a 1.5 mm thick specimen by a UL-94 vertical burning test method.

**9.** The thermoplastic resin composition according to any one of claims 1 to 8, wherein the thermoplastic resin composition has a notched Izod impact strength of about 10 kgf cm/cm to about 85 kgf·cm/cm, as measured on a 1/8" thick specimen in accordance with ASTM D256.

**10.** The thermoplastic resin composition according to any one of claims 1 to 9, wherein the thermoplastic resin composition has a Vicat softening temperature of about 90°C to about 140°C, as measured at a heating rate of 50°C/hr under a load of 5 kgf in accordance with ISO 306.

**11.** The thermoplastic resin composition according to any one of claims 1 to 10, wherein the thermoplastic resin composition has a melt-flow index of about 10 g/10 min to about 60 g/10 min, as measured on a specimen at a temperature of 220°C under a load of 10 kgf in accordance with ASTM D1238.

**12.** A molded product formed of the thermoplastic resin composition according to any one of claims 1 to 11.

## INTERNATIONAL SEARCH REPORT

International application No.
**PCT/KR2023/006823**

**A. CLASSIFICATION OF SUBJECT MATTER**

**C08L 69/00**(2006.01)i; **C08L 53/02**(2006.01)i; **C08L 25/18**(2006.01)i; **C08L 51/04**(2006.01)i; **C08L 51/08**(2006.01)i; **C08K 5/5435**(2006.01)i; **C08K 5/49**(2006.01)i; **C08K 5/00**(2006.01)i; **C08F 279/06**(2006.01)i

According to International Patent Classification (IPC) or to both national classification and IPC

**B. FIELDS SEARCHED**

Minimum documentation searched (classification system followed by classification symbols)

C08L 69/00(2006.01); C08F 2/04(2006.01); C08K 3/34(2006.01); C08L 51/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리카보네이트(polycarbonate), 난연제(flame retardant), 알콕시실란(alkoxysilane), 고무변성 비닐계 그라프트 공중합체(rubber-modified vinyl-based graft copolymer), 실리콘계 고무 변성 비닐계 그라프트 공중합체(silicone-based rubber modified vinyl-based graft copolymer)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2020-0060417 A (COVESTRO DEUTSCHLAND AG) 29 May 2020 (2020-05-29) See paragraphs [0105]-[0124], [0205], [0214], [0341]-[0344], [0349]-[0350] and [0374]; and claim 1. | 1-3 |
| Y | KR 10-2020-0090827 A (COVESTRO DEUTSCHLAND AG) 29 July 2020 (2020-07-29) See paragraphs [0101], [0266]-[0267] and [0306]; and claims 1-4. | 1-3 |
| Y | KR 10-2020-0061825 A (LOTTE ADVANCED MATERIALS CO., LTD.) 03 June 2020 (2020-06-03) See paragraph [0015]. | 2 |
| A | WO 2021-233727 A1 (COVESTRO DEUTSCHLAND AG) 25 November 2021 (2021-11-25) See entire document. | 1-3 |
| A | WO 2014-119827 A1 (CHEIL INDUSTRIES INC.) 07 August 2014 (2014-08-07) See entire document. | 1-3 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **23 August 2023** | **23 August 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2023/006823**

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☑ Claims Nos.: **4-12**
because they are dependent claims and are not drafted in accordance with the second and third sentences of Rule 6.4(a).

Form PCT/ISA/210 (continuation of first sheet) (July 2022)

**INTERNATIONAL SEARCH REPORT**
**Information on patent family members**

International application No.
**PCT/KR2023/006823**

| Patent document cited in search report | Publication date (day/month/year) | Patent family member(s) | Publication date (day/month/year) |
|---|---|---|---|
| KR 10-2020-0060417 A | 29 May 2020 | CN 111201282 A | 26 May 2020 |
| | | EP 3697847 A1 | 26 August 2020 |
| | | TW 201922922 A | 16 June 2019 |
| | | US 2021-0047512 A1 | 18 February 2021 |
| | | WO 2019-076495 A1 | 25 April 2019 |
| KR 10-2020-0090827 A | 29 July 2020 | CA 3080094 A1 | 27 June 2019 |
| | | CN 111465652 A | 28 July 2020 |
| | | CN 111465652 B | 18 October 2022 |
| | | EP 3728468 A1 | 28 October 2020 |
| | | EP 3728468 B1 | 01 September 2021 |
| | | JP 2021-507053 A | 22 February 2021 |
| | | MX 2020006406 A | 07 September 2020 |
| | | TW 201934658 A | 01 September 2019 |
| | | US 2021-0115248 A1 | 22 April 2021 |
| | | WO 2019-121272 A1 | 27 June 2019 |
| KR 10-2020-0061825 A | 03 June 2020 | EP 3889217 A1 | 06 October 2021 |
| | | EP 3889217 A4 | 07 September 2022 |
| | | KR 10-2226963 B1 | 11 March 2021 |
| | | US 2021-0355318 A1 | 18 November 2021 |
| | | WO 2020-111618 A1 | 04 June 2020 |
| WO 2021-233727 A1 | 25 November 2021 | CN 115551944 A | 30 December 2022 |
| | | EP 4153680 A1 | 29 March 2023 |
| | | KR 10-2023-0013029 A | 26 January 2023 |
| | | US 2023-0220196 A1 | 13 July 2023 |
| WO 2014-119827 A1 | 07 August 2014 | WO 2014-119827 A9 | 23 April 2015 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5061745 A